# EUROPEAN PATENT APPLICATION

(11) **EP 4 790 106 A1**
(43) Date of publication of application: **12.08.2026**
(21) Application number: 24874372.6
(22) Date of filing: 22.08.2024
(51) Int. Cl.: C08L 101/00, C08K 7/04, C09K 5/14

(54) **THERMALLY CONDUCTIVE SHEET**

(30) Priority: 02.10.2023 JP 2023171677
(71) Applicant: SHIN-ETSU CHEMICAL CO., LTD., Tokyo 100-0005 (JP)
(72) Inventor: IMAIZUMI, Keiji, Annaka-shi, Gunma 379-0224 (JP)
(74) Representative: Schicker, Silvia
(86) International application number: PCT/JP2024/029729
(87) International publication number: WO 2025/074758

(57) **Abstract**

The present invention is a thermally conductive sheet containing two or more kinds of fibrous thermally conductive fillers (B) having different average fiber diameters in a polymer matrix (A), wherein a ratio of the maximum diameter to the minimum diameter of the average fiber diameters is 2:1 to 45:1. This can provide a thermally conductive sheet having excellent thermal conductivity and low specific gravity by filling two or more kinds of fibrous thermally conductive fillers having different average fiber diameters.

## Description

### TECHNICAL FIELD

The present invention relates to a thermally conductive sheet.

### BACKGROUND ART

Recently, the demand for heat-dissipating materials has been increasing due to a remarkable shift to electronics in automobiles and an increase in the number of electronic materials to be mounted on them. Heat-dissipating materials of the sheet type are preferably used due to their readiness of mounting, etc. Furthermore, with automated driving as a background, further improvement in thermal conductivity is required for heat-dissipating materials. Generally, for the purpose of high thermal conductivity, it is necessary to increase the filling rate of fillers dispersed in a polymer, so the specific gravity tends to be high, exceeding 2.0. However, this has become a problem in promoting weight reduction to improve fuel consumption in a gasoline vehicle and electricity consumption in an EV.

For example, Patent Document 1 proposes a carbon fiber-containing sheet in which two types of carbon fibers with different fiber diameters are blended and oriented in one direction, thereby increasing the contact area between the carbon fibers and improving thermal conductivity.

However, in Patent Document 1, the ratio of the fiber diameters of the first fiber elements to those of the second fiber elements is 50:1 to 100:1, which means that the first fiber diameter is extremely large or the second fiber diameter is extremely small. Therefore, this causes problems such as an increase in the compound viscosity when blended with a synthetic resin, which makes it difficult to achieve a uniform compound, and inability to increase the filling ratio of the second fiber elements, leaving room for improvement in increasing the contact area.

In addition, there was room for further improvement in thermal conductivity by increasing the contact area further by filling multiple carbon fibers with different fiber diameters.

Furthermore, Patent Document 2 proposes heat-dissipating sheets in which carbon fibers having an average effective fiber length of 5 to 120 µm, an average fiber diameter of 200 to 900 nm, and an aspect ratio of 30 to 1,000 are oriented in the plane direction in a polymer.

However, in general, heat-dissipating sheets that transfer heat generated by a heat-generating body to a heat sink are often required to conduct heat in a thickness direction rather than in a plane direction of the heat-dissipating sheets, leaving room for improvement in the direction of heat conduction.

Furthermore, Patent Document 3 proposes a thermally conductive sheet having a thermal conductivity of 10 W/m·K or more, in which the volume fraction of a thermally conductive filler containing carbon fiber and an inorganic filler is 55 to 70%, and the volume fraction of a two-part addition reaction type silicone is 30 to 45%.

However, when a thermally conductive filler is contained in the volume fraction described in Patent Document 3, the specific gravity becomes large, and there is room for improvement in terms of decreasing the specific gravity.

### CITATION LIST

### PATENT LITERATURE

Patent Document 1: JP2019-111728A
Patent Document 2: JP2021-008629A
Patent Document 3: JP2022-127596A

### SUMMARY OF INVENTION

### TECHNICAL PROBLEM

The present invention has been made to solve the above-described problem. An object of the present invention is to provide a thermally conductive sheet having excellent thermal conductivity and low specific gravity by filling two or more kinds of fibrous thermally conductive fillers having different average fiber diameters.

### SOLUTION TO PROBLEM

To solve the above-described problem, the present invention provides a thermally conductive sheet comprising two or more kinds of fibrous thermally conductive fillers (B) having different average fiber diameters in a polymer matrix (A), wherein a ratio of the maximum diameter to the minimum diameter of the average fiber diameters is 2:1 to 45:1.

Such a thermally conductive sheet has an appropriate fiber diameter ratio, which improves fillability of the fibrous thermally conductive fillers and enables thermal conductivity to increase.

The thermally conductive sheet preferably has a thermal conductivity in a thickness direction of 25 W/m·K or higher and a specific gravity of less than 1.4.

Such a thermally conductive sheet can improve heat transfer efficiency by being placed between a heat-generating body and a heat-dissipating body. In addition, the inclusion of fibrous thermal conductive filler shortens a heat transfer path in the thermal conductive sheet, allowing for high thermal conductivity with a low filling amount, making it ideal for achieving low specific gravity.

The fibrous thermally conductive fillers (B) preferably have an aspect ratio of 2 or more and less than 30.

Such a fibrous thermally conductive filler prevents the fillers from becoming entangled with each other, thereby enabling fillability to be improved.

One or more kinds of the fibrous thermally conductive fillers (B) are preferably carbon fibers having an average fiber diameter of 8 µm or more.

Such a type of fibrous thermally conductive filler has high thermal conductivity in the long-axis direction of the fibrous thermally conductive filler, so thermal conductivity can increase efficiently by increasing the cross-sectional area. Additionally, carbon has a lower specific gravity than common thermally conductive fillers, such as alumina and aluminum nitride, making it suitable for achieving lower specific gravity.

One or more kinds of the fibrous thermally conductive fillers (B) are preferably carbon fibers having an average fiber diameter of 1 µm or more and less than 8 µm, or of less than 1 µm.

Such a fibrous thermally conductive filler is disposed between fillers having an average fiber diameter of 8 µm or more in a large proportion, thereby further increasing the thermal conductivity.

The fibrous thermally conductive fillers (B) are preferably contained in 20 to 60 mass% of the inventive thermally conductive sheet.

Such a thermally conductive sheet is advantageous in achieving both higher thermal conductivity and lower specific gravity.

The long-axis directions of the inventive fibrous thermally conductive fillers (B) are preferably oriented in the thickness direction of the thermally conductive sheet.

Such a thermally conductive sheet is preferable because it further shortens the heat transfer path in the thickness direction of the sheet.

The polymer matrix (A) is preferably a cured product of the curable polymer composition containing one or more kinds selected from the group consisting of organopolysiloxane, polyurethane, polyacrylate, perfluoropolyether elastomer, unsaturated polyester resin, polyamide resin, epoxy resin, and phenolic resin.

When the polymer matrix (A) is as such, the fillability of the fibrous thermally conductive filler (B) is preferable.

### ADVANTAGEOUS EFFECTS OF INVENTION

As described above, by filling two or more kinds of fibrous thermally conductive fillers having different average fiber diameters at an appropriate fiber diameter ratio, it is possible to obtain a thermally conductive sheet having excellent thermal conductivity and low specific gravity.

### DESCRIPTION OF EMBODIMENTS

As described above, it has been desired a thermally conductive sheet having excellent thermal conductivity and low specific gravity.

As a result of his diligent study to solve the above-described problems, the inventor found that, by filling fibrous thermally conductive fillers having different average fiber diameters, it is possible to obtain a thermally conductive sheet having excellent thermal conductivity and low specific gravity, and has completed the present invention.

That is, the present invention is a thermally conductive sheet containing two or more kinds of fibrous thermally conductive fillers (B) having different average fiber diameters in a polymer matrix (A), wherein a ratio of the maximum diameter to the minimum diameter of the average fiber diameters is 2:1 to 45:1.

Hereinafter, the present invention will be described in detail, but the present invention is not limited thereto.

### [Thermally Conductive Sheet]

The inventive thermally conductive sheet is a formed product, according to a method described later, by processing a filler-containing resin composition for a thermally conductive sheet, which contains two or more kinds of fibrous thermally conductive fillers (B) having different average fiber diameters in a polymer matrix (A), wherein a ratio of the maximum diameter to the minimum diameter of the average fiber diameters is 2:1 to 45:1. Details will be described below.

### [Filler-Containing Resin Composition]

The filler-containing resin composition is a resin composition containing a polymer matrix (A) and two or more kinds of fibrous thermally conductive fillers (B) having different average fiber diameters.

### [(A) Polymer Matrix]

Polymer matrix, being the component (A) of the filler-containing resin composition, is not particularly limited, but is preferably one or more kinds of curable polymer composition selected from the group consisting of organopolysiloxane, polyurethane, polyacrylate, perfluoropolyether elastomer, unsaturated polyester resin, polyamide resin, epoxy resin, and phenolic resin, in light of fillability of the component (B) fibrous thermally conductive filler; more preferably organopolysiloxane, perfluoropolyether elastomer, polyurethane, or polyacrylate, each of which is excellent in flexibility; and further preferably organopolysiloxane or perfluoropolyether, each of which is excellent in heat resistance and cold resistance.

### [Curable Polymer Composition]

Therefore, the component (A) is preferably a curable organopolysiloxane composition or a curable perfluoropolyether elastomer composition.

### [Curable Organopolysiloxane Composition]

Hereinafter, a curable organopolysiloxane composition is described specifically.

Examples the curable organopolysiloxane composition include thermosetting organopolysiloxane compositions, moisture-curable organopolysiloxane compositions, and electron beam-curable silicone resins. Examples of the thermosetting silicone resins include addition-curable organopolysiloxane compositions and peroxide-curable organopolysiloxane compositions. Among them, the addition-curable organopolysiloxane compositions are preferable. And addition-curable organopolysiloxane compositions containing the following components (A-1) to (A-3) are more preferable.
(A-1) Alkenyl group-containing organopolysiloxane
(A-2) Organohydrogenpolysiloxane
(A-3) Platinum group metal-based curing catalyst

### [(A-1) Alkenyl Group-Containing Organopolysiloxane]

The component (A-1) alkenyl group-containing organopolysiloxane is an organopolysiloxane having two or more alkenyl groups bonded to a silicon atom in one molecule, and is a main agent of the inventive filler-containing resin composition, which provides a thermally conductive silicone cured product. Generally, the main chain portion basically consists of repeating of diorganosiloxane units, and this may include a branched structure as a part of the molecular structure or may be a cyclic structure. A linear diorganopolysiloxane is preferable from the viewpoint of physical properties, such as mechanical strength of the cured product.

Examples of the alkenyl groups include those having usually about 2 to 8 carbon atoms, such as a vinyl group, an allyl group, a propenyl group, an isopropenyl group, a butenyl group, a hexenyl group, and a cyclohexenyl group. Among these, lower alkenyl groups, such as a vinyl group and an allyl group, are preferable, and a vinyl group is particularly preferable. It should be understood that, although two or more alkenyl groups exist preferably in the molecule, it is preferable that the alkenyl groups exist in a form connected only to the silicon atom at the end of the molecular chain to impart good flexibility to a cured product to be obtained.

The functional groups other than the alkenyl group are monovalent hydrocarbon groups. Examples thereof include: alkyl groups, such as a methyl group, a ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, and a dodecyl group; cycloalkyl groups, such as a cyclopentyl group, a cyclohexyl group, and a cycloheptyl group; aryl groups, such as a phenyl group, a tolyl group, a xylyl group, a naphthyl group, and a biphenylyl group; and aralkyl groups, such as a benzyl group, a phenylethyl group, a phenylpropyl group, and a methylbenzyl group. Among these, it is preferable to have 1 to 10 carbon atoms, and particularly preferable to have 1 to 6 carbon atoms. More preferable groups are alkyl groups having 1 to 3 carbon atoms, such as a methyl group, an ethyl group, a propyl group, and a 3,3,3-trifluoropropyl group, as well as a phenyl group. In addition, the functional groups other than the alkenyl groups bonded to the silicon atom are not limited to being all the same.

Usually, the kinematic viscosity of this organopolysiloxane at 25°C is preferably in the range of 10 to 100,000 mm²/s, and particularly preferably 5,000 to 100,000 mm²/s. When the kinematic viscosity is 10 mm²/s or more, the obtained resin composition has preferable storage stability. When it is 100,000 mm²/s or less, the obtained resin composition does not have poor extensibility.

It should be understood that, in this specification, the kinetic viscosity is the value measured at 25°C using a Cannon-Fenske viscometer described in JIS Z 8803:2011.

One kind of the component (A-1) organopolysiloxane may be used, or two or more kinds thereof having different viscosities may be used in a combination.

### [(A-2) Organohydrogenpolysiloxane]

The component (A-2) organohydrogenpolysiloxane is an organohydrogenpolysiloxane having 2 or more, preferably 2 to 100, hydrogen atoms (a hydrosilyl group) bonded directly to a silicon atom in one molecule in an average, and acts as a crosslinking agent for the component (A-1). That is, the hydrosilyl group in the component (A-2) is added to the alkenyl group in the component (A-1) by a hydrosilylation reaction promoted by the component (A-3) platinum group metal-based curing catalyst described later, to give a three-dimensional network structure having a crosslinked structure. It should be understood that, when the number of the hydrosilyl groups is less than 2, curing does not occur.

As the organohydrogenpolysiloxane, those represented by the following average structural formula (1) are used, but it is not limited thereto.

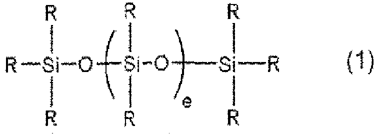

In the formula, "R" represents independently a hydrogen atom or a monovalent hydrocarbon group containing no aliphatic unsaturated bond, and 2 or more, preferably 2 to 100, and more preferably 2 to 10 of "R"s are hydrogen atoms in one molecule; and "e" represents an integer of 1 or more, preferably an integer of 10 to 200.

In the general formula (1), examples of the monovalent hydrocarbon group "R", which does not contain an unsaturated aliphatic bond other than a hydrogen atom, include, alkyl groups such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, and a dodecyl group; cycloalkyl groups, such as a cyclopentyl group, a cyclohexyl group, and a cycloheptyl group; aryl groups, such as a phenyl group, a tolyl group, a xylyl group, a naphthyl group, and a biphenylyl group; and aralkyl groups, such as a benzyl group, a phenylethyl group, a phenylpropyl group, and a methylbenzyl group. Among these, those having 1 to 10 carbon atoms, particularly 1 to 6 carbon atoms, are preferable. More preferably, they are alkyl groups having 1 to 3 carbon atoms, such as a methyl group, an ethyl group, a propyl group, and a 3,3,3-trifluoropropyl group, and a phenyl group. "R"s are not limited to being all the same.

The adding amount of the component (A-2) is, for example, an amount in which the hydrosilyl group derived from the component (A-2) is 0.1 to 5.0 moles, preferably 0.3 to 2.0 moles, and more preferably 0.5 to 1.5 moles, relative to one mole of the alkenyl group derived from the component (A-1). When the amount of the hydrosilyl group derived from the component (A-2) is 0.1 or more relative to one mole of the alkenyl group derived from the component (A-1), the composition is cured sufficiently, and the strength of the cured product is sufficient to maintain the shape as a molded body, so that the composition is not insufficient in strength to be handled. Further, when the amount is 5.0 moles or less, the cured product has a good flexibility, and is not brittle.

### [(A-3) Platinum Group Metal-Based Curing Catalyst]

The component (A-3) platinum group metal-based curing catalyst is a catalyst to promote the addition reaction between the alkenyl group derived from the component (A-1) and the hydrosilyl group derived from the component (A-2), and its examples include catalysts well known to be able to be used for the hydrosilylation reaction. Specific examples thereof include platinum group metal simple substances, such as platinum (including platinum black), rhodium, and palladium; platinum chlorides, such as H₂PtCl₄·nH₂O, H₂PtCl₆·nH₂O, NaHPtCl₆·nH₂O, KHPtCl₆·nH₂O, Na₂PtCl₆·nH₂O, K₂PtCl₄·nH₂O, PtCl₄·nH₂O, PtCl₂, Na₂HPtCl₄·nH₂O, wherein "n" represents an integer of 0 to 6, preferably 0 or 6; chloroplatinic acid and chloroplatinic acid salts; alcohol-modified chloroplatinic acid (see specification of US3220972A1); complexes of chloroplatinic acid and olefins (see specifications of US3159601A1, US3159662A1, and US3775452A1); platinum group metals, such as platinum black and palladium, supported on a carrier, such as alumina, silica, or carbon; rhodium-olefin complexes; chlorotris(triphenylphosphine)rhodium (Wilkinson's catalyst); and complexes of platinum chloride, chloroplatinic acid, or chloroplatinate with vinyl group-containing siloxanes, particularly vinyl group-containing cyclic siloxanes.

The amount of the component (A-3) used may be an effective amount and is preferably 0.1 to 2,000 ppm, more preferably 50 to 1,000 ppm, in terms of the mass of the platinum group metal relative to the component (A-1). When the amount is 0.1 ppm or more, sufficient catalytic activity is achieved; when the amount is 2,000 ppm or less, the effect on promoting the addition reaction is sufficient, and costs can be reduced.

### [Curable Perfluoropolyether Elastomer Compositions]

Additionally, a curable perfluoropolyether elastomer composition, which is another preferable embodiment, will be specifically described also.

Examples of the curable perfluoropolyether elastomer compositions include a heat-curable perfluoropolyether elastomer composition, a moisture-curable perfluoropolyether elastomer composition, and an electron beam-curable perfluoropolyether elastomer. Examples of the heat-curable perfluoropolyether elastomer include an addition-curable perfluoropolyether elastomer composition and a peroxide-curable perfluoropolyether elastomer composition. Among these, an addition-curable perfluoropolyether elastomer composition is preferable, and an addition-curable perfluoropolyether elastomer composition containing the following components (A-4) to (A-6) is more preferable.
(A-4) Alkenyl group-containing perfluoropolyether compound,
(A-5) Fluorine-containing organohydrogenpolysiloxane
(A-6) Platinum group metal-based curing catalyst

### [(A-4) Alkenyl Group-Containing Perfluoropolyether Compound]

The component (A-4) alkenyl-containing perfluoropolyether compound is a perfluoropolyether compound having two or more alkenyl groups in one molecule, and is a main agent of the inventive filler-containing resin composition (which provides a cured product of the thermally conductive perfluoropolyether). Usually, in general, the main chain portion basically includes repeats of perfluoropolyether units (perfluorooxyalkylene units).

Among them, it is the following general formula (2).

CH₂=CH-(X)_{z}-Rf¹-(X')_{z}-CH=CH₂ (2)

[In the formula, "X" represents a divalent group represented by a formula: -CH₂-, -CH₂O-, -CH₂OCH₂-, or - Y-NR¹-CO- (in the formula, "Y" represents a formula: - CH₂- or a divalent group represented by a formula: 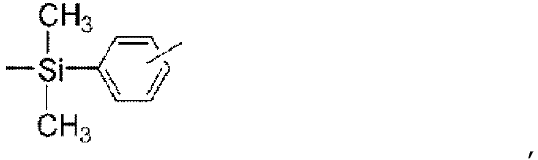
and R¹ represents a hydrogen atom or a monovalent hydrocarbon group.),
X' represents a divalent group represented by the formula: -CH₂-, -CH₂O-, -CH₂OCH₂-, or -CO-NR¹-Y'- (in the formula, Y' represents a formula: -CH₂- or a divalent group represented by a formula 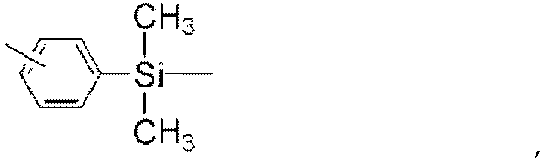
and R¹ represents the same as above),
Rf¹ represents a divalent perfluoropolyether group represented by the following formula (i):

   -Ct_{F}2_{t[}OCF2_{C}F(CF3₎]p_{O}CF2₍CF2₎r_{C}F2_{O}[CF(CF3₎CF2_{O}]q_{C}t_{'F}2_{t'-} (i)
(in the formula, "p" and "q" represent integers from 1 to 150, provided that the average of the sum of p and q is 2 to 200; "r" represents an integer from 0 to 6; and "t" and t' represent 2 or 3.)
or by the following formula (ii):

   -CₜF₂ₜ[OCF₂CF(CF₃)]ᵤ(OCF₂)ᵥOC_{t'}F_{2t'}- (ii)
(in the formula, "u" represents an integer from 1 to 200; "v" represents an integer from 1 to 50; and "t" and t' represent the same as defined above.), and "z" independently represents 0 or 1.]

The lower limit of the degree of polymerization (p+q) or (u+v) of the divalent perfluoropolyether group represented by Rf¹ is not particularly limited as long as it is an integer of 2 or more, but in order to have low pollution and low persistence, it is preferably 30 or more, particularly preferably 80 or more.

When R¹ is a monovalent hydrocarbon group, examples thereof include monovalent hydrocarbon groups having 1 to 20 carbon atoms, and specific examples include alkyl groups, such as a methyl group, an ethyl group, a propyl group, a butyl group, a hexyl group, a cyclohexyl group, an octyl group, and a decyl group; alkenyl groups, such as a vinyl group and a allyl group; aryl groups, such as a phenyl group, a tolyl group, and a naphthyl group; and aralkyl groups, such as a benzyl group and a phenylethyl group.

### [(A-5) Fluorine-Containing Organohydrogensiloxane]

The component (A-5) fluorine-containing organohydrogenpolysiloxane acts as a crosslinking agent or a chain-length extending agent for the component (A-4). For this, the fluorine-containing organohydrogenpolysiloxane has two or more, preferably three or more, hydrogen atoms (i.e., hydrosilyl groups) bonded to silicon atoms in one molecule. One kind of the components (A-5) may be used or two or more kinds thereof may be used in combination.

From the viewpoints of compatibility with the component (A-4), dispersibility, etc., the fluorine-containing organohydrogenpolysiloxane preferably has in one molecule one or more groups selected from perfluoroalkyl groups, perfluoroalkylene groups, perfluorooxyalkyl groups, and perfluorooxyalkylene groups. Examples of these perfluoro groups include, particularly, those represented by the following general formula.

### ··Perfluoroalkyl groups:

C_{g}F_{2g+1}-

In the formula, "g" represents an integer of 1 to 20, preferably 2 to 10.

### ··Perfluoroalkylene group:

-C_{g}F_{2g}-

In the formula, "g" represents the same as defined above.

### ··Perfluorooxyalkyl group:

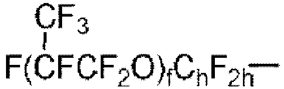

In the formula, "f" represents an integer from 2 to 200, preferably from 2 to 100, and h represents an integer from 1 to 3.

### ··Perfluorooxyalkylene group:

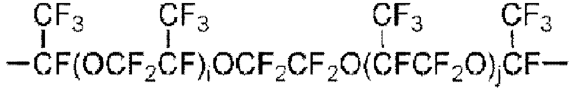

In the formula, "i" and "j" represent integers of 1 or more, and the average of i+j is 2 to 200, preferably 2 to 100.

-(CF₂CF₂O)ₖ(CF₂O)_{L}CF₂-

In the formula, "k" and "L" are each an integer of 1 or more, and the average of k+L is 2 to 200, preferably 2 to 100.

In addition, the divalent linking group bonding these perfluoroalkyl groups, perfluorooxyalkyl groups, perfluoroalkylene groups, or perfluorooxyalkylene groups to a silicon atom may be an alkylene group, an arylene group, or a combination thereof, or these groups intervened by an ether bond, an amide bond, a carbonyl bond, or the like. Examples include those having 2 to 12 carbon atoms as follows.

-CH2_{C}H2₋,

-CH2_{C}H2_{C}H2₋,

-CH2_{C}H2_{C}H2_{O}CH2₋,

-CH2_{C}H2_{C}H2₋NH-CO-,

-CH2_{C}H2_{C}H2₋N(Ph)-CO-,

-CH2_{C}H2_{C}H2₋N(CH3₎-CO-,

-CH2_{C}H2_{C}H2₋O-CO-,

-Ph'-N(CH3₎-CO-

Ph represents a phenyl group, and Ph' represents a phenylene group.

In the component (A-5) fluorine-containing organohydrogenpolysiloxane, fluorine-containing monovalent substituents, that is, the monovalent substituent groups bonded to a silicon atom other than organic groups containing a perfluoroalkyl group or a perfluorooxyalkyl group, include hydrocarbon groups having 1 to 20 carbon atoms, and examples thereof include unsubstituted hydrocarbon groups: alkyl groups, such as a methyl group, an ethyl group, a propyl group, a butyl group, a hexyl group, a cyclohexyl group, an octyl group, and decyl group; alkenyl groups, such as a vinyl group and an allyl group; aryl groups, such as a phenyl group, a tolyl group, and a naphthyl group; and aralkyl groups, such as a benzyl group and a phenylethyl group. In addition, the examples also include substituted hydrocarbon groups in which at least a part of the hydrogen atoms of these hydrocarbon groups are substituted with a chlorine atom or the like, such as a chloromethyl group, a chloropropyl group, and a cyanoethyl group.

The component (A-5) fluorine-containing organohydrogenpolysiloxane may be cyclic, linear, a three-dimensional network, or a combination thereof. The number of silicon atoms of this fluorine-containing organohydrogenpolysiloxane is not particularly limited, but is usually about 3 to 60, preferably about 4 to 30.

The molecular weight of the component (A-5) fluorine-containing organohydrogenpolysiloxane is preferably in the range of 750 to 3,000, more preferably 800 to 2,400.

A blending amount of the component (A-5) is an effective amount required to cure the component (A-4) and obtain a cured product having the desired rubber elasticity. In particular, the amount is such that hydrosilyl groups of the component (A-5) are supplied in an amount of 0.5 to 5.0 moles, preferably 1.0 to 2.0 moles, relative to one mole of the total of alkenyl groups that the component (A-4) in the present composition has. When the blending amount is sufficient, the degree of crosslinking is sufficient, and when it is not too much, chain extension is not prioritized, resulting in sufficient curing, no foaming during curing, and no decrease in the heat resistance, etc. of the obtained cured film.

### [(A-6) Platinum Group Metal-Based Curing Catalyst]

The component (A-6) platinum group metal curing catalyst is a catalyst for promoting the addition reaction between an alkenyl group derived from the component (A-4) and a hydrosilyl group derived from the component (A-5). Examples of such catalysts include well-known catalysts used in hydrosilylation reactions. Specific examples of such catalysts include the same curing catalysts as those exemplified for the component (A-3) above.

The amount of the component (A-6) to be used may be an effective amount as a catalyst. For example, it is preferable to blend 0.1 to 500 ppm (by mass) in terms of platinum group metal relative to the component (A-4).

### [(B) Fibrous Thermally Conductive Filler]

The component (B) of the inventive filler-containing resin composition is two or more types of fibrous thermally conductive fillers with different average fiber diameters. The upper limit of the number of different average fiber diameters in the component (B) is not particularly limited, but can be, for example, four or fewer.

The shape of the fibrous thermally conductive filler is not particularly limited as long as it is fibrous, and examples thereof include fibers, needles, and whiskers.

The size of the thermally conductive filler may also be selected appropriately as needed, and is not particularly limited, but the filler has preferably an aspect ratio (average length of the long-axis/ average length of the short-axis) of 2 or more and less than 30, more preferably 5 or more and less than 30.

Such a filler prevents the fibrous thermally conductive fillers from entangling with each other, thereby improving fillability and thermal conductivity.

The average length of the long-axis and the average length of the short-axis of the fibrous thermally conductive fillers can be measured by a scanning electron microscope (SEM), and the aspect ratio can be calculated from the measured values. For example, the aspect ratio of carbon fibers is the value of "average fiber length/average fiber diameter" of carbon fibers.

The average fiber diameter of the fibrous thermally conductive filler is not particularly limited, but is preferably 0.1 to 20 µm, more preferably 0.3 to 15 µm. Preferably, one of the fibrous thermally conductive fillers is a carbon fiber having an average fiber diameter of 8 µm or more.

Such a fibrous thermally conductive filler has a high thermal conductivity in the long-axis direction, thereby increasing the cross-sectional area in the transverse direction and thereby efficiently increasing thermal conductivity.

Additionally, carbon has a lower specific gravity than common thermally conductive fillers, such as alumina and aluminum nitride, making it preferable for reducing specific gravity.

It is also preferable that one or more kinds of the fibrous thermally conductive fillers are a carbon fiber selected from those having an average fiber diameter of 1 µm or more and less than 8 µm or an average fiber diameter less than 1 µm.

Such a fibrous thermally conductive filler is disposed in a large proportion between fillers having an average fiber diameter of 8 µm or more, thereby further increasing the thermal conductivity.

The present invention is also characterized by containing two or more types of fibrous thermally conductive fillers having different average fiber diameters. The ratio of the maximum diameter to the minimum diameter of these average fiber diameters is 2:1 to 45:1, and preferably 3:1 to 40:1. When the ratio is less than 2:1, interference between fibers is not sufficiently reduced, thereby being not preferable; when the ratio is more than 45:1, the compound viscosity increases, making it difficult to increase the filling ratio of fibers having the minimum fiber diameter, thereby making it not preferable.

The contained proportion of the component (B) fibrous thermally conductive filler in the inventive thermally conductive sheet is preferably 20 to 60 mass%, more preferably 30 to 52 mass%. When within this range, a balance between increasing high thermal conductivity and reducing low specific gravity is suitable, thereby preferable.

It is also preferable that the long-axis direction of the component (B) fibrous thermally conductive filler is oriented in the thickness direction of the thermally conductive sheet obtained by curing the composition.

Such a thermally conductive sheet is preferable because it further shortens the heat transfer path in the thickness direction of the sheet.

### [Other Components]

The filler-containing resin composition can be further blended with components, for example, such as solvents, thixotropy-imparting agents, dispersants, curing agents, curing accelerators, retardants, slight-tackifiers, plasticizers, flame retardants, antioxidants, stabilizers, colorants, etc., as needed.

Further, the filler-containing resin composition may contain a filler other than the component (B). Specific examples include silica and titanium oxide. The blending amount of the filler is not particularly limited, but is preferably 0 to 60 parts by mass, more preferably 0 to 40 parts by mass, relative to 100 parts by mass of the component (A).

### [Method for Producing Filler-Containing Resin Composition]

The filler-containing resin composition can be produced by mixing the polymer matrix, the thermally conductive filler, and, if necessary, the other components using a mixer or the like.

### [Method for Producing Thermally Conductive Sheet]

The method for producing the inventive thermally conductive sheet includes a step of molding the filler-containing resin composition and a curing step thereof, and examples thereof include the following methods.

There is a method to obtain the thermally conductive sheet having excellent thermal conductivity in a thickness direction and low specific gravity through a process including:
(I-1) a preparing step of preparing a filler-containing resin composition including the polymer matrix (A) and the thermally conductive filler (B);
(I-2) a filling step of filling the filler-containing resin composition into a mold;
(I-3) a molding step of curing the filler-containing resin composition filled in a mold by heating or the like to obtain a filler-containing molded body; and
(I-4) a slicing step of slicing the filler-containing molded body to obtain thermally conductive sheets.

Hereinafter, each of the steps is described in detail.

### Preparing step (I-1)

In this step, a filler-containing resin composition containing the polymer matrix (A) and the fibrous thermally conductive filler (B) are prepared according to the method for producing filler-containing resin composition.

### Filling step (I-2)

The prepared filler-containing resin composition is filled into a mold measuring 40 mm in the X-axis direction (width direction) × 40 mm in the Y-axis direction (length direction) × 80 mm in the Z-axis direction (height direction) using a dispenser.

### (Method for filling)

(i) The resin composition is discharged in the mold so that the discharge directions are parallel to the X-axis direction of the mold, and then stacked in the Z-axis direction for filling.
(ii) The resin composition is discharged in the mold so that the discharge directions are parallel to the Y-axis direction of the mold, and then stacked in the Z-axis direction for filling.

In this way, a molded body in which the fibrous thermally conductive fillers and the like are oriented can be obtained more preferably and efficiently.

The number of times that the resin compositions are stacked in the Z-axis direction is preferably two or more, more preferably 20 times or more.

### Method for molding (I-3)

In the molding step, by heating the filler-containing resin composition filled in the mold, a filler-containing molded body can be obtained.

The curing conditions of the filler-containing resin composition are optimized depending on the type, etc. of the filler-containing resin composition. For example, the curing conditions of the filler-containing molded body obtained from the filler-containing resin composition using a silicone resin are preferably as follows.

The curing temperature is preferably 0 to 200°C, more preferably 10 to 150°C. The curing time is preferably 1 minute to 24 hours, more preferably 5 minutes to 1 hour.

### Slicing step (I-4)

The slicing step is a step to obtain a thermally conductive sheet with a desired thickness by slicing the filler-containing molded body obtained in the molding step above. Specifically, the process goes through the following (i) or (ii).
(i) The filler-containing molded body, in which the resin composition was discharged in a direction parallel to the X-axis of the mold and then stacked in the Z-axis direction for filling, is sliced parallel to the Y-Z plane.
(ii) The filler-containing molded body, in which the resin composition was discharged in a direction parallel to the Y-axis of the mold and then stacked in the Z-axis direction for filling, is sliced parallel to the X-Z plane.
By slicing the molded body in a desired thickness, thermally conductive sheets in which the long-axis directions of the fibrous thermally conductive fillers are oriented in the thickness direction can be obtained.

### EXAMPLE

Hereinafter, the present invention will be described in detail. However, the present invention is not limited thereto.

It should be understood that the kinetic viscosity is a value at 25°C using a Cannon-Fenske viscometer described in JIS Z 8803:2011. The average fiber length, the average fiber diameter, and the aspect ratio are determined by SEM measurements. The average particle size is the cumulative average particle size (median diameter), on a volume basis, measured by a particle size distribution measuring apparatus "Microtrac MT3300EX II", manufactured by MicrotracBEL Corp.

### <Addition Reaction-Type Organopolysiloxane>

The components of the addition reaction-type organopolysiloxane composition are (A-1) to (A-3) below.

### Component (A-1)

Organopolysiloxane represented by the following formula: 97.1% by mass

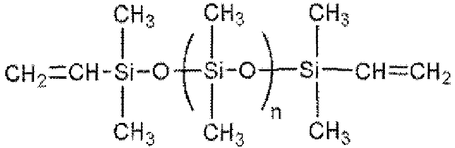

In the formula, "n" represents a number that makes the kinematic viscosity at 25°C 30,000 mm²/s.

### Component (A-2)

Organohydrogenpolysiloxane represented by the following formula: 2.2 mass%

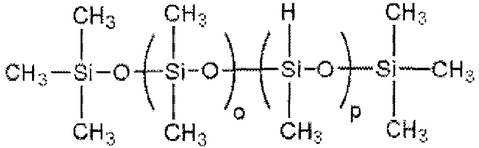

In the formula above, o=27, p=3, and each is the average degree of polymerization.

### Component (A-3)

### 5% 2-ethylhexanol solution of chloroplatinic acid: 0.7 mass%

A filler-containing resin composition of the present invention was produced as follows.

### <Filler-Containing Organopolysiloxane Composition A>

55.0 mass% of addition reaction-type organopolysiloxane composition (specific gravity: 1.0), 30.4 mass% of carbon fiber A (average fiber length: 250 µm, average fiber diameter: 10 µm, aspect ratio: 25, and specific gravity: 2.2), 3.6 mass% of carbon fiber B (average fiber length: 40 µm, average fiber diameter: 3 µm, aspect ratio: 13, and specific gravity: 2.2), and 11.0 mass% of carbon fiber C (average fiber length: 10 µm, average fiber diameter: 0.5 µm, aspect ratio: 20, and specific gravity: 2.2) were mixed to obtain a filler-containing organopolysiloxane composition A (specific gravity: 1.32).

### <Filler-Containing Organopolysiloxane Composition B>

55.0 mass% of addition reaction-type organopolysiloxane composition (specific gravity: 1.0), 34.0 mass% of carbon fiber A (average fiber length: 250 µm, average fiber diameter: 10 µm, aspect ratio: 25, and specific gravity: 2.2), and 11.0 mass% of carbon fiber B (average fiber length: 40 µm, average fiber diameter: 3 µm, aspect ratio: 13, and specific gravity: 2.2) were mixed to obtain a filler-containing organopolysiloxane composition B (specific gravity: 1.32).

### <Filler-Containing Organopolysiloxane Composition C>

55.0 mass% of addition reaction-type organopolysiloxane composition (specific gravity: 1.0), 34.0 mass% of carbon fiber A (average fiber length: 250 µm, average fiber diameter: 10 µm, aspect ratio: 25, and specific gravity: 2.2), and 11.0 mass% of carbon fiber C (average fiber length: 10 µm, average fiber diameter: 0.5 µm, aspect ratio: 20, and specific gravity: 2.2) were mixed to obtain a filler-containing organopolysiloxane composition C (specific gravity: 1.32).

### <Filler-Containing Organopolysiloxane Composition D>

55.0 mass% of addition reaction-type organopolysiloxane composition (specific gravity: 1.0), and 45.0 mass% of carbon fiber D (average fiber length: 300 µm, average fiber diameter: 10 µm, aspect ratio: 30, and specific gravity: 2.2) were mixed to obtain a filler-containing organopolysiloxane composition D (specific gravity: 1.32).

### <Filler-Containing Organopolysiloxane Composition E>

55.0 mass% of addition reaction-type organopolysiloxane composition (specific gravity: 1.0), 34.0 mass% of carbon fiber A (average fiber length: 250 µm, average fiber diameter: 10 µm, aspect ratio: 25, and specific gravity: 2.2), and 11.0 mass% of carbon fiber E (average fiber length: 50 µm, average fiber diameter: 10 µm, aspect ratio: 5, and specific gravity: 2.2) were mixed to obtain a filler-containing organopolysiloxane composition E (specific gravity: 1.32).

### <Filler-Containing Organopolysiloxane Composition F>

45.6 mass% of addition reaction-type organopolysiloxane composition (specific gravity: 1.0), 34.0 mass% of carbon fiber A (average fiber length: 250 µm, average fiber diameter: 10 µm, aspect ratio: 25, and specific gravity: 2.2), and 20.4 mass% of carbon fiber E (average fiber length: 50 µm, average fiber diameter: 10 µm, aspect ratio: 5, and specific gravity: 2.2) were mixed to obtain a filler-containing organopolysiloxane composition F (specific gravity: 1.42).

### <Filler-Containing Organopolysiloxane Composition G>

55.0 mass% of addition reaction-type organopolysiloxane composition (specific gravity: 1.0), and 45.0 mass% of carbon fiber B (average fiber length: 40 µm, average fiber diameter: 3 µm, aspect ratio: 13, and specific gravity: 2.2) were mixed to obtain a filler-containing organopolysiloxane composition G (specific gravity: 1.3).

### <Filler-Containing Organopolysiloxane Composition H>

55.0 mass% of addition reaction-type organopolysiloxane composition (specific gravity: 1.0), and 45.0 mass% of carbon fiber C (average fiber length: 10 µm, average fiber diameter: 0.5 µm, aspect ratio: 20, and specific gravity: 2.2) were mixed to obtain a filler-containing organopolysiloxane composition H (specific gravity: 1.32).

Using the filler-containing organopolysiloxane compositions A to H, thermally conductive sheets were produced as follows.

### <Example 1>

The filler-containing organopolysiloxane composition A was filled into a container using a nozzle having an inner diameter of 1.64 mm of a dispenser (MOHNO MASTER V2) manufactured by Musashi Engineering, wherein the discharged composition was arranged, in the container, in the Y-axis direction, 24 rows in the X-axis direction, and 24 columns in the Z-axis direction. The container was then heated at 80°C for 20 minutes to obtain a filler-containing molded body 1. The cured product, which is the filler-containing molded body, was sliced in parallel to the XZ plane using a cutter knife to obtain a thermally conductive sheet 1 with a thickness of 2 mm.

### <Example 2>

A thermally conductive sheet 2 was obtained in the same manner as in Example 1, except that the filler-containing organopolysiloxane composition was changed to the filler-containing organopolysiloxane composition B.

### <Example 3>

A thermally conductive sheet 3 was obtained in the same manner as in Example 1, except that the filler-containing organopolysiloxane composition was changed to the filler-containing organopolysiloxane composition C.

### <Comparative Example 1>

A thermally conductive sheet 3 was tried to be obtained in the same manner as in Example 1, except that the filler-containing organopolysiloxane composition was changed to the filler-containing organopolysiloxane composition D, but the composition could not be ejected from the nozzle, and a thermally conductive sheet could not be obtained.

### <Comparative Example 2>

A thermally conductive sheet 4 was obtained in the same manner as in Example 1, except that the filler-containing organopolysiloxane composition was changed to the filler-containing organopolysiloxane composition E.

### <Comparative Example 3>

A thermally conductive sheet 5 was obtained in the same manner as in Example 1, except that the filler-containing organopolysiloxane composition was changed to the filler-containing organopolysiloxane composition F.

### <Comparative Example 4>

A thermally conductive sheet 6 was obtained in the same manner as in Example 1, except that the filler-containing organopolysiloxane composition was changed to the filler-containing organopolysiloxane composition G.

### <Comparative Example 5>

A thermally conductive sheet 7 was obtained in the same manner as in Example 1, except that the filler-containing organopolysiloxane composition was changed to the filler-containing organopolysiloxane composition H.

### <Evaluation Items>

The thermal conductivity and the specific gravity of each of the thermally conductive sheets obtained in Examples 1 to 3 and Comparative Examples 2 to 5 were measured as follows.

### <Thermal Conductivity>

Each thermally conductive sheet obtained in Examples 1 to 3 and Comparative Examples 2 to 5 was punched out to be a circle with a diameter of 12.7 mm. The punched out was used as a test piece and the thermal conductivity was measured using a laser flash method (LFA 447 Nanoflash, manufactured by NETZSCH-Gerätebau GmbH) in accordance with JIS R 1611:2010. The results are shown in Table 1 below.

### <Specific gravity>

For each thermally conductive sheet obtained in Examples 1 to 3 and Comparative Examples 1 to 5, the specific gravity at 25°C was measured in accordance with JIS K 6249:2003. The results are shown in Table 1 below.

**[Table 1]**

| | Example 1 | Example 2 | Example 3 | Comparative Example 1 | Comparative Example 2 | Comparative Example 3 | Comparative Example 4 | Comparative Example 5 |
|---|---|---|---|---|---|---|---|---|
| Filler-containing organopolysiloxane resin composition | A | B | C | D | E | F | G | H |
| Carbon fiber A content | 30.4 | 34.0 | 34.0 | - | 34.0 | 34.0 | | - |
| Carbon fiber B content | 3.6 | 11.0 | - | - | - | - | 45.0 | - |
| Carbon fiber C content | 11.0 | - | 11.0 | - | - | - | - | 45.0 |
| Carbon fiber D content | - | - | - | 45.0 | - | - | - | - |
| Carbon fiber E content | - | - | - | - | 11.0 | 20.4 | | - |
| Carbon fiber content (total) | 45.0 | 45.0 | 45.0 | 45.0 | 45.0 | 54.4 | 45.0 | 45.0 |
| Thermal conductivity (W/m · K) | 32.1 | 26.0 | 28.1 | - | 17.1 | 20.6 | 8.9 | 4.7 |
| specific gravity | 1.30 | 1.31 | 1.31 | - | 1.31 | 1.40 | 1.30 | 1.31 |

Examples 1, 2, and 3 all have a carbon fiber content (total) of 45.0%, and contain two or more types of carbon fibers with different average fiber diameters, an average fiber diameter of 8 µm or more, and 1 µm or more but less than 8 µm or less than 1 µm. The ratio of the maximum diameter to the minimum diameter of the average fiber diameter was within the range of 2:1 to 45:1. Example 1 had a thermal conductivity of 32.1 W/m·K and a specific gravity of 1.30, Example 2 had a thermal conductivity of 26.0 W/m·K and a specific gravity of 1.31, and Example 3 had a thermal conductivity of 28.1 W/m·K and a specific gravity of 1.31.

Comparative Example 2 (carbon fibers A and E having an average fiber diameter of 10 µm), Comparative Example 4 (carbon fiber B having an average fiber diameter of 3 µm), and Comparative Example 5 (carbon fiber C having an average fiber diameter of 0.5 µm) have a carbon fiber content (total) of 45.0%, but all of them have one type of average fiber diameter of the carbon fibers. Comparative Example 2 had a thermal conductivity of 17.1 W/m·K and a specific gravity of 1.31, Comparative Example 4 had a thermal conductivity of 8.9 W/m·K and a specific gravity of 1.30, and Comparative Example 5 had a thermal conductivity of 4.7 W/m·K and a specific gravity of 1.31, all of which were lower than Examples 1 to 3. This result means that even if the filling amount of fibrous thermally conductive filler is the same, the thermal conductivity increases by including two or more types of fibrous thermally conductive fillers having different average fiber diameters.

In Comparative Example 1, which had a carbon fiber content (total) of 45.0% but one type of average fiber diameter (carbon fiber D with an average fiber diameter of 10 µm and an aspect ratio of 30), dispenser discharge was not possible during the producing process of the thermally conductive sheet, and thereby it was impossible to proceed to the production of a sheet. molded. This result indicates that when the average fiber diameter is 8 µm or more, and the aspect ratio is 30 or more, the compound viscosity increases, making it difficult to achieve a high filling level.

Comparative Example 3 (carbon fibers A and E with an average fiber diameter of 10 µm), which had a carbon fiber content (total) of 54.4 mass%, which was higher than that of Examples 1 to 3, had one type having an average fiber diameter of 10 µm, a thermal conductivity of 20.6 W/m·K, which was lower than that of Examples 1 to 3, and a specific gravity of 1.40. This result indicates that even if the amount of fibrous thermally conductive filler is low, the thermal conductivity can be increased by including two or more types of fibrous thermally conductive fillers with different average fiber diameters, with the ratio of maximum to minimum average fiber diameters ranging from 2:1 to 45:1.

In this way, the present invention can provide a thermally conductive sheet that has excellent thermal conductivity and low specific gravity by filling it with two or more types of fibrous conductive fillers that have different average fiber diameters, and the ratio of the maximum diameter to the minimum diameter is in the range of 2:1 to 45:1.

The present The present description includes the following embodiments.
[1]: A thermally conductive sheet comprising two or more kinds of fibrous thermally conductive fillers (B) having different average fiber diameters in a polymer matrix (A), wherein a ratio of the maximum diameter to the minimum diameter of the average fiber diameters is 2:1 to 45:1.
[2]: The thermally conductive sheet of the above [1], wherein the thermally conductive sheet has a thermal conductivity in a thickness direction of 25 W/m·K or higher and a specific gravity of less than 1.4.
[3]: The thermally conductive sheet of the above [1] or [2], wherein the fibrous thermally conductive fillers (B) have an aspect ratio of 2 or more and less than 30.
[4]: The thermally conductive sheet of any one of the above [1] to [3], wherein one or more kinds of the fibrous thermally conductive fillers (B) are carbon fibers having an average fiber diameter of 8 µm or more.
[5]: The thermally conductive sheet of any one of the above [1] to [4], wherein one or more kinds of the fibrous thermally conductive fillers (B) are carbon fibers having an average fiber diameter of 1 µm or more and less than 8 µm, or of less than 1 µm.
[6]: The thermally conductive sheet of any one of the above [1] to [5], wherein the fibrous thermally conductive fillers (B) are contained in 20 to 60 mass% of the thermally conductive sheet.
[7]: The thermally conductive sheet of any one of the above [1] to [6], wherein the long-axis directions of the fibrous thermally conductive fillers (B) are oriented in the thickness direction of the thermally conductive sheet.
[8]: The thermally conductive sheet of any one of the above [1] to [7], wherein the polymer matrix (A) is a cured product of the curable polymer composition comprising one or more kinds selected from the group consisting of organopolysiloxane, polyurethane, polyacrylate, perfluoropolyether elastomer, unsaturated polyester resin, polyamide resin, epoxy resin, and phenolic resin.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A thermally conductive sheet comprising two or more kinds of fibrous thermally conductive fillers (B) having different average fiber diameters in a polymer matrix (A), wherein a ratio of the maximum diameter to the minimum diameter of the average fiber diameters is 2:1 to 45:1.

2. The thermally conductive sheet according to claim 1, wherein the thermally conductive sheet has a thermal conductivity in a thickness direction of 25 W/m·K or higher and a specific gravity of less than 1.4.

3. The thermally conductive sheet according to claim 1, wherein the fibrous thermally conductive fillers (B) have an aspect ratio of 2 or more and less than 30.

4. The thermally conductive sheet according to claim 1, wherein one or more kinds of the fibrous thermally conductive fillers (B) are carbon fibers having an average fiber diameter of 8 µm or more.

5. The thermally conductive sheet according to claim 1, wherein one or more kinds of the fibrous thermally conductive fillers (B) are carbon fibers having an average fiber diameter of 1 µm or more and less than 8 µm, or of less than 1 µm.

6. The thermally conductive sheet according to claim 1, wherein the fibrous thermally conductive fillers (B) are contained in 20 to 60 mass% of the thermally conductive sheet.

7. The thermally conductive sheet according to claim 1, wherein the long-axis directions of the fibrous thermally conductive fillers (B) are oriented in the thickness direction of the thermally conductive sheet.

8. The thermally conductive sheet according to claim 1, wherein the polymer matrix (A) is a cured product of the curable polymer composition comprising one or more kinds selected from the group consisting of organopolysiloxane, polyurethane, polyacrylate, perfluoropolyether elastomer, unsaturated polyester resin, polyamide resin, epoxy resin, and phenolic resin.
